# EUROPEAN PATENT SPECIFICATION

(11) **EP 3 366 949 B1**
(45) Date of publication and mention of the grant of the patent: **07.06.2023**
(21) Application number: 15858091.0
(22) Date of filing: 20.10.2015
(51) Int. Cl.: F16H 55/26

(54) **TRANSMISSION DEVICE AND CORNER-TURNING MECHANISM FOR RACK THEREOF**
GETRIEBEVORRICHTUNG UND KURVENABBIEGEMECHANISMUS FÜR GESTELL DAVON
DISPOSITIF DE TRANSMISSION ET MÉCANISME DE GIRATION AU COIN POUR CRÉMAILLÈRE ASSOCIÉE

(43) Date of publication of application: 29.08.2018
(73) Proprietor: Shenzhen Zhaowei Machinery&electronics Co., Ltd., Shenzhen, Guangdong 518103 (CN)
(72) Inventor: FEI, Jiayi, Shenzhen, Guangdong 518103 (CN); XIN, Dong, Shenzhen, Guangdong 518103 (CN); NAN, Fenyong, Shenzhen, Guangdong 518103 (CN)
(74) Representative: Miller Sturt Kenyon
(86) International application number: PCT/CN2015/092309
(87) International publication number: WO 2017/066920

(56) References cited:
- CN-A- 1 730 984
- CN-U- 2 116 121
- CN-U- 203 717 786
- DE-A1- 10 103 490
- DE-A1- 10 103 490
- US-A- 5 156 574
- US-B1- 6 321 945

## Description

The invention belongs to the technical field of transmission, in particular to a transmission device and a rack corner steering mechanism thereof.

### BACKGROUND

In the transmission mechanism, the pinion-and-rack transmission mechanism is mainly used for converting rotary motion of the gear into linear motion of the rack, and the rack as a whole, usually only reciprocates along a straight line.

To realize the rack steering and continuous motion and power transfer, generally an arc track is arranged at the corner to achieve steering the rack in the arc track. However the transmission mechanism of the arc track has poor stability, tends to jam, and has significant friction between the rack and the arc track and low transmission efficiency.

The US patent No. 6321945B1, discloses a compact motor driven dispenser for dispensing caulking and glue material, the compact motor driven dispenser includes a housing having a barrel portion and a handle portion. The barrel portion includes a top wall, a bottom wall, a back wall, a front wall, a first side wall and a second side wall. The front wall has an opening therein. The top wall has an inner surface having a track mounted thereon. A collapsible push rod is positioned in the housing and has a first end and a second end. The second has a head thereon. The push rod is extendably positioned between the track and the top wall such that the push rod abuts the back wall and the second end of the rod extends toward the front wall of the housing in a generally U-shaped configuration. A motor is positioned in the housing and in communication with the teeth of the push rod.

### SUMMARY

The present invention aims at providing a transmission device and a rack corner steering mechanism thereof, to solve the existing problem that the rack corner steering has poor stability, tends to jam, and has low transmission efficiency.

To solve the above technical problem, the preset invention provides a rack corner steering mechanism according to claim 1.

In an embodiment of the present invention, each of the rack unit comprises a main body, the front side of the main body is provided with a connecting part, the rear side of the main body is caved inward to form a first connecting groove, the end of the plunger is provided with a second connecting groove, the connecting part of the rack unit adjacent to the plunger extends in the second connecting groove and is pivotally connected through a connecting column, the connecting part of each of the other rack unit successively extend in the first connecting groove of the front rack unit and is pivotally connected through the connecting column.

In an embodiment of the present invention, each connecting part is a connecting block integrally formed on the main body, the side walls of the main body adjacent to the input gear is the second tooth surface, the side wall of the connecting block adjacent to the input gear flushes with the second tooth surface, the second tooth surface extends to the side wall of the connecting block adjacent to the input gear, and the connecting column is parallel to the second tooth surface.

In an embodiment of the present invention, each connecting column is disposed on an arc trajectory of the corner.

In an embodiment of the present invention, the rear wall of each main body is provided with a first inclined surface at the position connected with the second tooth surface.

In an embodiment of the present invention, in the first connecting groove, an inner wall opposite to a insertion direction of the connecting part is provided with a second inclined surface at the position connected with the second tooth surface; within the second connecting groove, the inner wall opposite to the insertion direction of the connecting part is provided with a third inclined surface at the position connected with the first tooth surface.

In an embodiment of the present invention, the bottom of the pipe orifice portion is provided with needle rollers.

The present invention also provides a transmission device comprising the rack corner steering mechanism mentioned above.

In the present invention, the rack corner steering mechanism uses the rack unit in a horizontal position to drive other rack units, and the rack unit can be rotated to ensure the flexible steering of the steering mechanism, the reciprocating motion of the input gear is converted into the reciprocating motion of the plunger, which has the advantages of smooth operation, good continuity, low noise, high bearing capacity, reliable, compact structure, and small volume.

### BRIEF DESCRIPTION OF THE DRAWINGS

FIG. 1 shows a schematic structure view of the rack corner steering mechanism of the embodiment of the present invention;
FIG. 2 shows the schematic structure view of the rack steering assembly of the embodiment of the present invention;
FIG. 3 shows the schematic structure view of the rack unit of the embodiment of the present invention;
FIG. 4 shows the top view of the rack unit of the embodiment of the present invention;
FIG. 5 shows an enlarged view of A part in FIG. 2;
FIG. 6 shows a schematic view of the assembled rack steering assembly and the cylinder of the embodiment of the present invention;
FIG. 7 shows the schematic structure view of the rack corner steering mechanism before steering of the embodiment of the present invention;
FIG. 8 shows the schematic structure view of the rack corner steering mechanism after steering of the embodiment of the present invention;
FIG. 9 shows the motion track of the rack steering assembly of the embodiment of the present invention;

10- input gear; 20- rack steering assembly 21- plunder;
211- first tooth surface; 212-second connecting groove; 22- rack unit;
221- second tooth surface; 222- main body; 223- connecting part;
224- first connecting groove; 225-first connecting hole; 226-second connecting hole;
227- first inclined surface; 228- second inclined surface; 30- housing;
40- cylinder; 50- retainer; 51- pipe orifice portion;
52- fixing portion; 60- needle roller.

### DESCRIPTION OF EMBODIMENTS

To make the objectives, technical solutions, and advantages of the present invention clearer and more comprehensible, the following further describes the present invention in detail with reference to the accompanying drawings and embodiments. It should be understood that the specific embodiment described herein is merely used to explain the present invention but is not used to limit the present invention.

It should be noted that when an element is described as "fixed on" or "disposed on" another element, it can be directly on another element or there may be an intermediate element between them; when an element is described as "connected to", it can be directly connected to another element or there may be an intermediate element between them.

It also should be noted that the orientation terms in the embodiments such as left, right, top, bottom and so on, are only relative concepts or are referenced to the normal operating state of the product, and should not be considered to be restrictive.

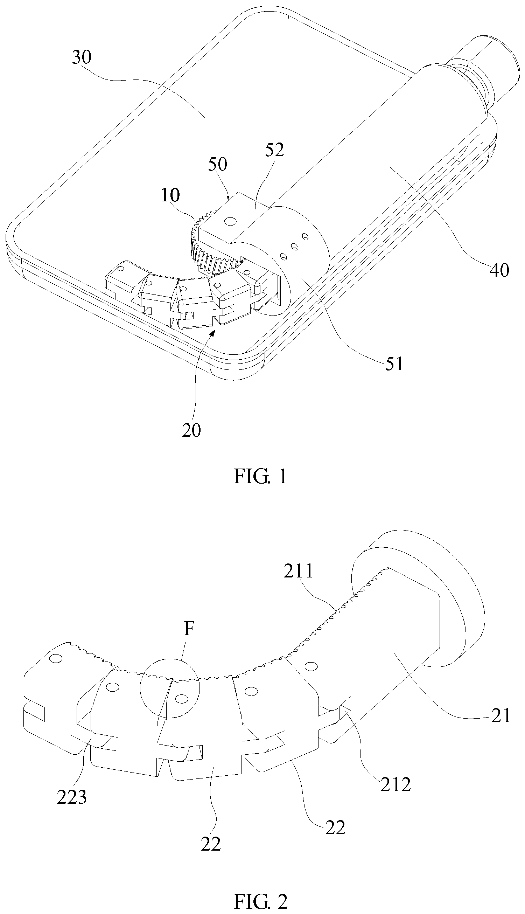

The following specific examples of the specific implementation of the invention are described in detail:
Referring to FIG. 1, FIG. 2, the present invention provides a corner rack steering mechanism comprises an input gear 10 and a rack steering assembly 20 driven by the input gear 10. The rack steering assembly 20 comprises a plunger 21 and a plurality of rack units 22 successively movably connected to an end of the plunger and arranged in a corner shape. The input gear 10 is located on one side of the rack steering assembly 20, the plunger 21 is a straight bar and along a linear trajectory, a side wall of the plunger 21 adjacent to the input gear 10 is a first tooth surface 211, the side wall of each rack unit 22 adjacent to the input gear 10 is a second tooth surface 221, the teeth on the first tooth surface 211 is the same as the teeth on the second tooth surface 221, the teeth can be engaged with the input gear 10. The plunger 21 adjacent to the rack unit 22 is obliquely connected to the end of the plunger 21, each of the other rack units 22 is successively obliquely connected to the end of the front rack unit 22. Since the plunger 21 is a straight bar and is moved along a straight trajectory, when the motion of the plunger 21 drives the respective rack units 22 to move forward and when the second tooth surface 221of each rack unit 22 is engaged with the input gear 10, the engaged rack unit 22 is rotated a certain angle and is in line with the plug 21.

In the present invention, the plunger 21 is used to drive the rack unit 22 in a horizontal position adjacent thereto, and this rack unit 22 is used to drive the other rack units 22 at the corner, during the process the rotatable structure of the rack units 22 ensure the flexible steering of the steering mechanism, the reciprocating motion of the input gear 10 is converted into the reciprocating motion of the plunger 21, which has the advantages of smooth operation, good continuity, low noise, high bearing capacity, reliable, compact structure, and small volume.

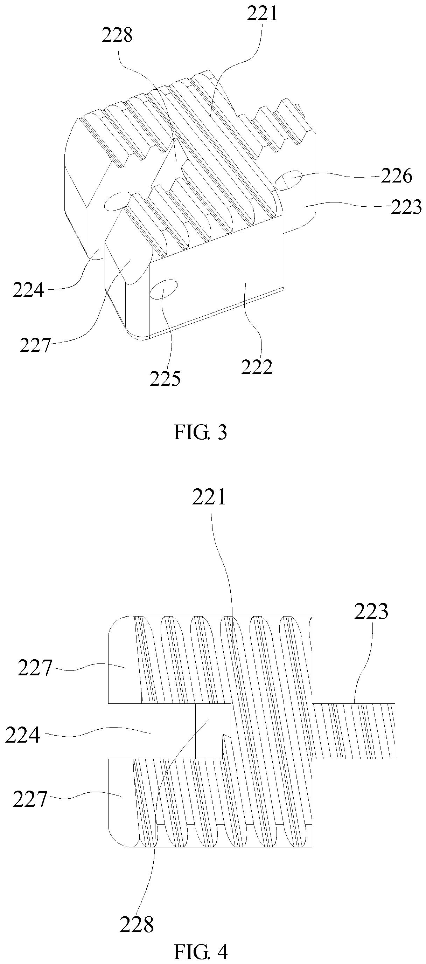

Also referring to FIGS. 3 and 4, in this embodiment, each rack unit 22 has the same configuration. The rack unit 22 comprises a main body 222, the front side of the body 222 is provided with the connecting part 223, the rear side of the main body 222 is caved inward to form a first connecting groove 224. The end of the plunger 21 is provided with a second connecting groove 212, the connecting part 223 of the rack unit 22 adjacent to the plunger 21 extends in the second connecting groove 212 and is pivotally connected through a connecting column (not shown), the connecting part 223 of each of the other rack unit 22 successively extend in the first connecting groove 224 of the front rack unit 22 and is pivotally connected through the connecting column.

Specifically, the body 222 is hexahedron shaped, and the connecting part 223 is a connecting block integrally formed on the main body 222. The connecting block is located in the center of the front side of the main body 222. The side wall of the main body 222 adjacent to the input gear 10 is the second tooth surface 221, and the side wall of the connecting block adjacent to the input gear 10 extends to flush with the second tooth surface 221, the second tooth surface 221 extends to the side wall of the connecting block adjacent to the input gear 10, i.e., the side wall of the connecting block adjacent to the input gear 10 is also provided with the teeth which is the same as the teeth on the second tooth surface 221 and is configured to be engaged with the input gear 10. Correspondingly, the first connecting groove 224 though the main body 222 comprises two opposite side walls. Thus, when the connecting block 224 extends into the first connecting groove, the teeth on the connecting block just fill the vacancy of the teeth caused by the first connecting groove 224, such that the teeth on the back rack unit 22 can blend with the teeth of front rack unit 22. Similarly, the above-described structure allows the rack unit 22 to have a more compact structure and have a better blend when the rack unit 22 is connected with the plunger 21.

And the two opposite side walls 224 of the first connecting groove are provided with two first connecting holes 225, the connecting block provided with a second connecting hole 226, when the connecting block is inserted into the first connecting groove 224, the second connecting hole 226 aligns with the two first connecting holes 225, the connecting column is in turn inserted through the three connecting holes thereby achieving the connection of adjacent rack units 22. In this embodiment, the connecting column is a pin. The connection structure between the rack unit 22 and the plunger 21 is the same as the connection structure between adj acent rack units 22, also the connection is achieved through the pin. The pin is parallel to the second tooth surface 221 and the first tooth surface 211, i.e., as shown in FIG. 2, the pin is arranged vertically. Thus, each of the rack units 22 may rotate inwardly or outwardly about the pin.

In this embodiment, the connected rack units 22 form a corner, the corner has a center, each rack unit 22 rotates about the center, each connecting column i.e. the pin is disposed on the arc trajectory of the corner.

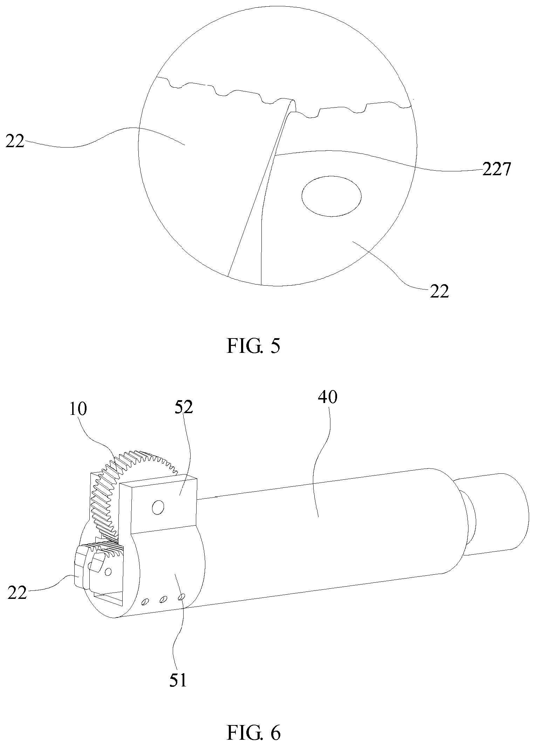

The rear wall of the main body 222 of each rack unit 22 is provided with a first inclined surface 227 at the position connected with the second tooth surface 221. In conjunction with FIG. 3 and FIG. 5, during the motion of the rack unit 22, the inner side of the front side of the back rack unit 22 contacts the inner side of the back side of the front rack unit 22, the provided first inclined surface 227 at this position can not only to avoid the adjacent two rack units 22 from interfering each other at the contact position, but also can be used to control the angle between two adjacent rack units 22 before the corner, such that the rack unit 22 can be moved along the arc trajectory of the corner.

Also, to avoid the interference and to control the angle, in the first connecting groove 224, an inner wall opposite to a insertion direction of the connecting part 223 is provided with a second inclined surface 228 at the position connected with the second tooth surface 221; within the second connecting groove 212, the inner wall opposite to the insertion direction of the connecting part 223 is provided with a third inclined surface (not shown) at the position connected with the first tooth surface 211.

Preferably, in this embodiment, the teeth on the first tooth surface 211 and the teeth on the second tooth 221 are helical teeth; correspondingly the input gear 10 is the helical gear. The input gear 10 may be engaged with the plunger 21 and each rack unit 22 through the helical teeth, the contact ratio is high, such that a greater torque transmission can be achieved. Of course, the first tooth surface 211 and the second tooth surface 221 may be set to be straight tooth surfaces.

Conjunction with FIG. 1 and FIG. 6, in this embodiment, the rack corner steering mechanism further comprises a housing 30, a cylinder 40 and a retainer 50. The housing 30 has a right angle corner, the cylinder 40 is arranged in front of the corner, that is, the cylinder is located on one side of the corner. The plunger 21 is inserted into the cylinder, each rack unit 22 is located at the corner, the input gear 10 is fixed on the retainer 50. Of course, the corner may be a non-right angle corner, in this embodiment, in the rack corner steering mechanism, the angle of the corner is not limited.

The retainer 50 comprises a pipe orifice portion 51 with a C-shaped cross-section and fixing portions 52 extending upward from two ends of the pipe orifice portion 51, the pipe orifice portion 51 is connected to the cylinder 40 to allow the plunger 21 and each rack unit 22 to pass through, the input gear 10 is fixed between two fixing portion 52. The above components are fixed through the above configuration, such that the overall structure of the steering mechanism is compact, that space of the corner is made full use to place the rack units, to achieve long-distance linear motion of the plunger 21.

In this embodiment, the bottom of the pipe orifice portion 51 is provided with needle rollers 60, the needle rollers 60 allow combining the rotation and the roll, thereby reducing the frictions between the plunger 21 and the retainer 50 and between the rack unit 22 and the retainer 50 during motion, which helps to improve transmission efficiency, reduce noise and reduce the impact.

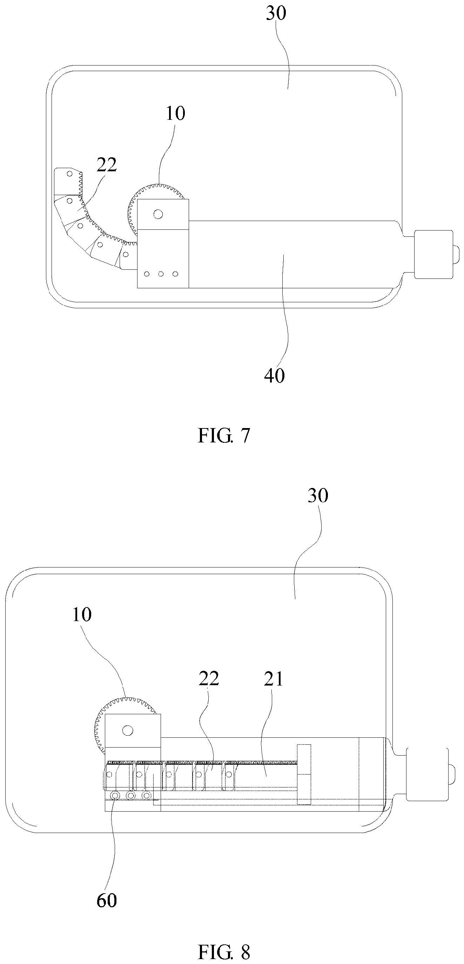

Referring to FIGS. 7 and 8, the input gear 10 is rotated to drive the plunger 21 to move forward and enter the cylinder 40, and then moves straightly along the cylinder 40. The plunger 21 is moved forward also leads the plurality of rack units 22 connected with the plunger 22 to move forward along the corner. As shown in FIG. 7, at the beginning of the motion, the adjacent rack units 22 are obliquely connected, when the rack unit 22 is engaged with the input gear 10, the rack unit 22 is rotated is in line with the plunger 21.

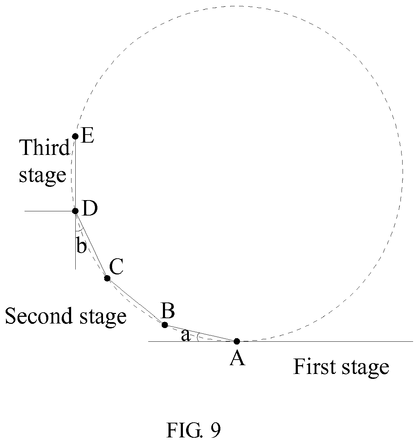

Referring to FIG. 9, when the rack unit 22 is moved forward at the corner, when the input gear 10 drives the plunger 21 to move forward, the connection point A of the plunder 21 and the adjacent rack unit 22 moves along a horizontal line, that is a first stage, in this case the angle "a" between the rack unit 22 and the horizontal direction is gradually reduced to zero; when each of the other rack units 22 is moved forward, the distances between the connection points B, C, D between the rack units 22 maintain the fixed length of the rack cell 22, and the connection points B, C, D are located on a circle (as shown by a broken line) and rotate about the center of the circle, that is the second phase, the angle between the rack units 22 doesn't change; the connection point E of the last rack unit 22 is moved along the vertical direction before entering the arc region of the corner, that is the first stage, the angle "b" between the rack unit 22 between point C and point D and the vertical direction increases gradually from 0, when entering the arc of the corner i.e. entering the second stage, the angle "b" reaches a maximum, the maximum value of the angle "b" is equal to the value of the angle of the first inclined surface 227 of the rack unit 22. When the input gear 10 drives inversely, the principle is the same as that of the above motion, only the direction is opposite.

The present invention also provides a transmission device (not shown), the transmission device comprises the rack corner steering mechanism mentioned above. The rack corner steering mechanism allow the flexible steering in the steering mechanism, and has the advantages of smooth operation, good continuity, low noise, high bearing capacity, reliable, compact structure, and small volume.

## Claims

1. A rack corner steering mechanism comprising an input gear (10) and a rack steering assembly (20) driven by the input gear (10), the rack steering assembly (20) comprises a plunger (21) and a plurality of rack units (22) which are successively movably connected to an end of the plunger (21) and arranged in a corner shape, wherein the plunger (21) is a straight bar and is moved along a straight trajectory, a side wall of the plunger (21) close to the input gear (10) is a first tooth surface (211) to be engaged with the input gear (10), a side wall of each of the rack units (22) close to the input gear (10) is a second tooth surface (221) to be engaged with the input gear (10), that rack unit of the rack units (22) adjacent to the plunger (21) is obliquely connected to the end of the plunger (21), each of the other rack units (22) is successively connected to the end of its preceding rack unit, and the rack corner steering mechanism is configured such that when the second tooth surface (221) of a rack unit is engaged with the input gear (10), this rack unit is rotated to be brought in line with the plunger (21); and wherein the rack corner steering mechanism further comprises a housing (30), a retainer (50), and a cylinder (40), the housing (30) has a corner, the cylinder (40) is arranged at a front side of the corner, the plunger (21) is inserted into the cylinder (40), each rack unit (22) is located at the corner, the input gear (10) is fixed on the retainer (50); **characterized in that**
the retainer (50) comprises a pipe orifice portion (51) with a C-shaped cross-section and two fixing portions (52) extending upward from two ends of the pipe orifice portion (51), the pipe orifice portion (51) is connected to the cylinder (40) to allow the plunger (21) and each rack unit (22) to pass through, the input gear (10) is fixed between said two fixing portions (52), and the rack corner steering mechanism is configured such that the input gear (10) may be rotated to drive the plunger (21) to move forward and enter the cylinder (40), and then to move straightly along the cylinder (40).

2. The rack corner steering mechanism of claim 1, **characterized in that** each of the rack units (22) comprises a main body (222), the front side of the main body (222) is provided with a connecting part (223), the rear side of the main body (222) is caved inward to form a first connecting groove (224), the end of the plunger (21) is provided with a second connecting groove (212), the connecting part (223) of the rack unit (22) adjacent to the plunger (21) extends in the second connecting groove (212) and is pivotally connected through a connecting column, the connecting part (223) of each of the other rack unit successively extend in the first connecting groove (224) of the front rack unit (22) and is pivotally connected through the connecting column.

3. The rack corner steering mechanism of claim 2, **characterized in that** each connecting part (223) is a connecting block integrally formed on the main body (222), side walls of the main body (222) adjacent to the input gear (10) is the second tooth surface (221), the side wall of the connecting block adjacent to the input gear (10) flushes with the second tooth surface (221), the second tooth surface (221) extends to the side wall of the connecting block adjacent to the input gear (10), and the connecting column is parallel to the second tooth surface (221).

4. The rack corner steering mechanism of claim 2, **characterized in that** each connecting column is disposed on an arc trajectory of the rack corner.

5. The rack corner steering mechanism of claim 2, **characterized in that** the rear wall of each main body (222) is provided with a first inclined surface (227) at the position connected with the second tooth surface (221).

6. The rack corner steering mechanism of claim 2, **characterized in that** within the first connecting groove (224), an inner wall opposite to a insertion direction of the connecting part (223) is provided with a second inclined surface (228) at the position connected with the second tooth surface (221); within the second connecting groove (212), the inner wall opposite to the insertion direction of the connecting part (223) is provided with a third inclined surface at the position connected with the first tooth surface (211).

7. The rack corner steering mechanism of claim 1, **characterized in that** the bottom of the pipe orifice portion is provided with needle rollers (60).

8. A transmission device comprising the rack corner steering mechanism of any of claims 1-7.

## Patentansprüche

1. Zahnstangenkurvensteuerungsmechanismus, umfassend ein Eingangszahnrad (10) und eine Zahnstangensteuerungsanordnung (20), angetrieben durch das Eingangszahnrad (10), wobei die Zahnstangensteuerungsanordnung (20) einen Stempel (21) und mehrere Zahnstangeneinheiten (22) umfasst, die nacheinander bewegbar mit einem Ende des Stempels (21) verbunden und in einer Kurvenform angeordnet sind, wobei der Stempel (21) eine gerade Stange ist und entlang einer geraden Trajektorie bewegt wird, wobei eine Seitenwand des Stempels (21) nahe am Eingangszahnrad (10) eine erste Zahnoberfläche (211) ist, die mit dem Eingangszahnrad (10) in Eingriff zu bringen ist, wobei eine Seitenwand jeder der Zahnstangeneinheiten (22) nahe am Eingangszahnrad (10) eine zweite Zahnoberfläche (221) ist, die mit dem Eingangszahnrad (10) in Eingriff zu bringen ist, wobei die Zahnstangeneinheit der Zahnstangeneinheiten (22) angrenzend an den Stempel (21) schräg mit dem Ende des Stempels (21) verbunden ist, wobei jede der anderen Zahnstangeneinheiten (22) nacheinander mit dem Ende ihrer vorhergehenden Zahnstangeneinheit verbunden ist und wobei der Zahnstangenkurvensteuerungsmechanismus so ausgelegt ist, dass, wenn die zweite Zahnoberfläche (221) einer Zahnstangeneinheit im Eingriff mit dem Eingangszahnrad (10) ist, diese Zahnstangeneinheit gedreht wird, um in eine Linie mit dem Stempel (21) gebracht zu werden; und wobei der Zahnstangenkurvensteuerungsmechanismus ferner ein Gehäuse (30), einen Halter (50) und einen Zylinder (40) umfasst, wobei das Gehäuse (30) eine Kurve aufweist, der Zylinder (40) an einer Vorderseite der Kurve angeordnet ist, der Stempel (21) in den Zylinder (40) eingesetzt ist, jede Zahnstangeneinheit (22) an der Kurve befindlich ist, das Eingangszahnrad (10) am Halter (50) fixiert ist; **dadurch gekennzeichnet, dass**
der Halter (50) einen Rohröffnungsteil (51) mit einem C-förmigen Querschnitt und zwei Befestigungsteilen (52), die sich von zwei Enden des Rohröffnungsteils (51) nach oben erstrecken, umfasst, wobei der Rohröffnungsteil (51) mit dem Zylinder (40) verbunden ist, um dem Stempel (21) und jeder Zahnstangeneinheit (22) zu ermöglichen hindurchzulaufen, wobei das Eingangszahnrad (10) zwischen zwei Befestigungsteilen (52) fixiert ist, und wobei der Zahnstangenkurvensteuerungsmechanismus so ausgelegt ist, dass das Eingangszahnrad (10) gedreht werden kann, um den Stempel (21) anzutreiben, um sich vorwärts zu bewegen und in den Zylinder (40) einzutreten und sich danach gerade entlang des Zylinders (40) zu bewegen.

2. Zahnstangenkurvensteuerungsmechanismus nach Anspruch 1, **dadurch gekennzeichnet, dass** jede der Zahnstangeneinheiten (22) einen Hauptkörper (222) umfasst, wobei die Vorderseite des Hauptkörpers (222) mit einem Verbindungsteil (223) versehen ist, wobei die Hinterseite des Hauptkörpers (222) nach innen eingesenkt ist, um eine erste Verbindungsnut (224) zu bilden, wobei das Ende des Stempels (21) mit einer zweiten Verbindungsnut (212) versehen ist, wobei sich der Verbindungsteil (223) der Zahnstangeneinheit (22) angrenzend an den Stempel (21) in die zweite Verbindungsnut (212) erstreckt und durch eine Verbindungssäule schwenkbar verbunden ist, wobei sich der Verbindungsteil (223) jeder der anderen Zahnstangeneinheiten nacheinander in die erste Verbindungsnut (224) der vorderen Zahnstangeneinheit (22) erstreckt und durch die Verbindungssäule schwenkbar verbunden ist.

3. Zahnstangensteuerungsmechanismus nach Anspruch 2, **dadurch gekennzeichnet, dass** jeder Verbindungsteil (223) ein Verbindungsblock ist, der integral am Hauptkörper (222) ausgebildet ist, wobei die Seitenwände des Hauptkörpers (222) angrenzend an das Eingangszahnrad (10) die zweite Zahnoberfläche (221) sind, wobei die Seitenwand des Verbindungsblocks angrenzend an das Eingangszahnrad (10) bündig mit der zweiten Zahnoberfläche (221) ist, wobei sich die zweite Zahnoberfläche (221) zur Seitenwand des Verbindungsblocks angrenzend an das Eingangszahnrad (10) erstreckt, und wobei die Verbindungssäule parallel zur zweiten Zahnoberfläche (221) ist.

4. Zahnstangenkurvensteuerungsmechanismus nach Anspruch 2, **dadurch gekennzeichnet, dass** jede Verbindungssäule an einer Bogentrajektorie der Zahnstangenkurve angeordnet ist.

5. Zahnstangenkurvensteuerungsmechanismus nach Anspruch 2, **dadurch gekennzeichnet, dass** die hintere Wand jedes Hauptkörpers (222) versehen ist mit einer ersten geneigten Oberfläche (227) an der Position, die mit der zweiten Zahnoberfläche (221) verbunden ist.

6. Zahnstangenkurvensteuerungsmechanismus nach Anspruch 2, **dadurch gekennzeichnet, dass**: innerhalb der ersten Verbindungsnut (224) eine innere Wand gegenüber einer Einsetzungsrichtung des Verbindungsteils (223) versehen ist mit einer zweiten geneigten Oberfläche (228) an der Position, die mit der zweiten Zahnoberfläche (221) verbunden ist; innerhalb der zweiten Verbindungsnut (212) die innere Wand gegenüber der Einsetzungsrichtung des Verbindungsteils (223) versehen ist mit einer dritten geneigten Oberfläche an der Position, die mit der ersten Zahnoberfläche (211) verbunden ist.

7. Zahnstangenkurvensteuerungsmechanismus nach Anspruch 1, **dadurch gekennzeichnet, dass** der Boden des Rohröffnungsteils mit Nadelrollen (60) versehen ist.

8. Getriebevorrichtung, umfassend den Zahnstangenkurvensteuerungsmechanismus nach einem der Ansprüche 1-7.

## Revendications

1. Mécanisme de direction au coin de crémaillère comprenant un engrenage d'entrée (10) et un ensemble de direction à crémaillère (20) entraîné par l'engrenage d'entrée (10), l'ensemble de direction à crémaillère (20) comprenant un plongeur (21) et une pluralité d'unités de crémaillère (22) qui sont successivement reliées de manière mobile à une extrémité du plongeur (21) et disposées sous la forme d'un coin, le plongeur (21) étant une barre droite et étant déplacé le long d'une trajectoire droite, une paroi latérale du plongeur (21) proche de l'engrenage d'entrée (10) étant une première surface dentée (211) destinée à venir en prise avec l'engrenage d'entrée (10), une paroi latérale de chaque unité de crémaillère (22) proche de l'engrenage d'entrée (10) étant une seconde surface dentée (221) destinée à venir en prise avec l'engrenage d'entrée (10), l'unité de crémaillère des unités de crémaillère (22) adjacente au plongeur (21) étant reliée obliquement à l'extrémité du plongeur (21), chacune des autres unités de crémaillère (22) étant successivement reliée à l'extrémité de l'unité de crémaillère qui la précède, et le mécanisme de direction au coin de crémaillère étant conçu de sorte que lorsque la seconde surface dentée (221) d'une unité de crémaillère est en prise avec l'engrenage d'entrée (10), cette unité de crémaillère est tournée pour être alignée avec le plongeur (21) ; et le mécanisme de direction au coin de crémaillère comprenant en outre un boîtier (30), un dispositif de retenue (50) et un cylindre (40), le boîtier (30) ayant un coin, le cylindre (40) étant disposé sur un côté avant du coin, le plongeur (21) étant inséré dans le cylindre (40), chaque unité de crémaillère (22) étant située au niveau du coin, l'engrenage d'entrée (10) étant fixé sur le dispositif de retenue (50) ; **caractérisé en ce que**
le dispositif de retenue (50) comprend une partie d'orifice de tuyau (51) ayant une section transversale en forme de C et deux parties de fixation (52) s'étendant vers le haut à partir de deux extrémités de la partie d'orifice de tuyau (51), la partie d'orifice de tuyau (51) étant reliée au cylindre (40) pour permettre au plongeur (21) et à chaque unité de crémaillère (22) de passer à travers, l'engrenage d'entrée (10) étant fixé entre lesdites deux parties de fixation (52), et le mécanisme de direction au coin de crémaillère étant conçu de sorte que l'engrenage d'entrée (10) puisse être tourné pour amener le plongeur (21) à se déplacer vers l'avant et à entrer dans le cylindre (40), puis à se déplacer en ligne droite le long du cylindre (40).

2. Mécanisme de direction au coin de crémaillère selon la revendication 1, **caractérisé en ce que** chacune des unités de crémaillère (22) comprend un corps principal (222), le côté avant du corps principal (222) est pourvu d'une partie de liaison (223), le côté arrière du corps principal (222) est creusé vers l'intérieur pour former une première rainure de liaison (224), l'extrémité du plongeur (21) est pourvue d'une seconde rainure de liaison (212), la partie de liaison (223) de l'unité de crémaillère (22) adjacente au plongeur (21) s'étend dans la seconde rainure de liaison (212) et est reliée de manière pivotante par l'intermédiaire d'une colonne de liaison, la partie de liaison (223) de chacune des autres unités de crémaillère s'étend successivement dans la première rainure de liaison (224) de l'unité de crémaillère avant (22) et est reliée de manière pivotante par l'intermédiaire de la colonne de liaison.

3. Mécanisme de direction au coin de crémaillère selon la revendication 2, **caractérisé en ce que** chaque partie de liaison (223) est un bloc de liaison formé d'un seul tenant sur le corps principal (222), les parois latérales du corps principal (222) adjacent à l'engrenage d'entrée (10) sont la seconde surface dentée (221), la paroi latérale du bloc de liaison adjacent à l'engrenage d'entrée (10) affleure la seconde surface dentée (221), la seconde surface dentée (221) s'étend jusqu'à la paroi latérale du bloc de liaison adjacent à l'engrenage d'entrée (10), et la colonne de liaison est parallèle à la seconde surface dentée (221).

4. Mécanisme de direction au coin de crémaillère selon la revendication 2, **caractérisé en ce que** chaque colonne de liaison est disposée sur une trajectoire en arc de cercle du coin de crémaillère.

5. Mécanisme de direction au coin de crémaillère selon la revendication 2, **caractérisé en ce que** la paroi arrière de chaque corps principal (222) est pourvue d'une première surface inclinée (227) au niveau de la position reliée à la seconde surface dentée (221).

6. Mécanisme de direction au coin de crémaillère selon la revendication 2, **caractérisé en ce que**, dans la première rainure de liaison (224), une paroi intérieure opposée à une direction d'insertion de la pièce de liaison (223) est pourvue d'une deuxième surface inclinée (228) au niveau de la position reliée à la seconde surface dentée (221) ; dans la seconde rainure de liaison (212), la paroi intérieure opposée à la direction d'insertion de la pièce de liaison (223) est pourvue d'une troisième surface inclinée au niveau de la position reliée à la première surface dentée (211).

7. Mécanisme de direction au coin de crémaillère selon la revendication 1, **caractérisé en ce que** le fond de la partie d'orifice de tuyau est pourvu d'aiguilles de roulement (60).

8. Dispositif de transmission comprenant le mécanisme de direction au coin de crémaillère selon l'une quelconque des revendications 1 à 7.
